Europäisches Patentamt

European Patent Office

Office européen des brevets

(19)

(11) Veröffentlichungsnummer: **0 218 116**
**B1**

(12) **EUROPÄISCHE PATENTSCHRIFT**

(45) Veröffentlichungstag der Patentschrift:
14.12.88

(21) Anmeldenummer: 86112539.1

(22) Anmeldetag: 10.09.86

(51) Int. Cl.⁴: **F 16 L  5/00,** F 16 L  33/23,
H 01 R  13/56, H 02 G  3/06

(54) **Verschraubung aus Kunstoff zur Ein- und Durchführung, Abdichtung und Zugentlastung von Kabeln, Leitungen oder Schläuchen.**

(30) Priorität: 05.10.85  DE 3535595

(43) Veröffentlichungstag der Anmeldung:
15.04.87 Patentblatt 87/16

(45) Bekanntmachung des Hinweises auf die Patenterteilung:
14.12.88 Patentblatt 88/50

(84) Benannte Vertragsstaaten:
AT FR GB NL SE

(56) Entgegenhaltungen:
DE-C-2 132 951
DE-C-2 631 996
DE-U-8 415 525
FR-A-840 387
US-A-2 034 644
US-A-3 659 880

(73) Patentinhaber: Hermann Kleinhuis GmbH. & Co.
KG, An der Steinert 1, D-5880 Lüdenscheid
(Westf.) (DE)

(72) Erfinder: Henniger, Dieter, Unterm Eichholz 21,
D-5885 Schalksmühle (DE)

(74) Vertreter: Buse, Karl Georg, Dipl.- Phys.,
Patentanwälte Dipl.- Phys. Buse Dipl.- Phys.
Mentzel Dipl.- Ing. Ludewig Unterdörnen 114,
D-5600 Wuppertal 2 (DE)

LIBER, STOCKHOLM 1988

## Beschreibung

Die Erfindung bezieht sich auf eine Verschraubung aus Kunststoff zur Ein- und Durchführung, Abdichtung und Zugentlastung von Kabeln, Leitungen oder Schläuchen, bestehend aus einem hohlzylindrischen Zwischenstutzen mit zugeordnetem Dichtungskörper und einer Hutmutter bzw. Druckschraube, wobei am hohlzylindrischen Zwischenstutzen durch Schlitze voneinander getrennte Zungen koaxial angeordnet sind, welche beim Betätigen der Hutmutter den Dichtungskörper gegen die Umfangsfläche des eingeführten Kabels od.dgl. pressen.

Solche Verschraubungen - auch Kabelverschraubungen genannt - sind in mannigfachen Ausführungsformen bekannt. So ist durch die DE-C-2 132 951 eine abdichtende Wanddurchführung mit Gewindenippel, Überwurfmutter und einem verschraubbaren, verformbaren und mit Längsschlitzen versehenen Dichtungseinsatz aus Kunststoff zum gas- und wasserdichten Anschließen von Rohrleitungen und durchgeführten elektrischen Kabeln bekanntgeworden, bei der der Dichtungseinsatz ebene axiale Schlitze aufweist, die tangential zur inneren Bohrung des Dichtungseinsatzes angeordnet sind. Beim bestimmungsgemäßen Gebrauch überlappen sich die geschlitzten Elemente des Dichtungseinsatzes in Umfangsrichtung fächerartig.

Es ist ferner durch die DE-C-2 631 996 eine Verschraubung aus Kunststoff der genannten Art bekannt, bei der die teilweise übereinander sich bewegenden Klemmzungen zahnähnliche Segmente bilden, in welche zur Verdrehungssicherung zwischen Druckschraube und Zwischenstutzen eine Schrägverzahnung im Inneren der Druckschraube eingreift. Bei dieser Ausführungsform soll beim Aufschrauben der Druckschraube die an deren Innenseite angeordnete Schrägverzahnung die freien Enden der Klemmzungen nacheinander mit einer zum Kabel hin gerichteten Kraft belasten, derart, daß sich die Klemmzungen teilweise übereinanderbewegen und die Zähne in die von den Klemmzungen gebildete gezahnte Segmentierung einrasten.

Eine weitere bekannte Ausführungsform einer Kabelverschraubung ist in der DE-U-8 415 525 offenbart. Bei dieser bekannten Kabelverschraubung bilden die Zungen bzw. Klemmzungen einen Klemmzungenring. Dabei ist die Form mindestens einer dieser Klemmzungen derart getroffen, daß bei einwirkendem Hutmutterdruck diese selektive Klemmzunge aus dem Ringverbund der restlichen Klemmzungen in Richtung auf das eingeführte Kabel getrieben wird, derart, daß sich zwischen dem Kabel einerseits und dem nach innen auf das Kabel gepreßten Klemmzungenwirkbund andererseits eine unrunde Beziehung ergibt. Dabei ist vorgesehen, die Segmentierung der angrenzend aneinanderstehenden Klemmzungen so zu treffen, daß für mindestens eine der Klemmzungen eine beidseitig wirksame Schräge-Ebene-Konfiguration gebildet ist, die bei einwirkendem Hutmutterdruck diese eine Klemmzunge aus dem Ringverbund der restlichen Klemmzungen heraus und in Richtung auf das eingeführte Kabel treibt. Bei dieser bekannten Ausführungsform der Kabelverschraubung wird somit bewußt eine Verformwirkung auf das Kabel od.dgl. ausgeübt, so daß sich insgesamt gesehen eine komplementär unrunde Form von Kabeldichtung und Klemmzungenwirkbund ergibt.

Die vorliegende Erfindung geht aus von den Verschraubungen aus Kunststoff der eingangs näher gekennzeichneten Art. Sie will ebenfalls die Abdichtung und Zugentlastung von Kabeln, Leitungen, Schläuchen od.dgl. erreichen, jedoch mit anderen als den bisher bekannten Mitteln. Dabei soll zugleich die neue Verschraubung aus Kunststoff in einfacher und wohlfeiler Weise herstellbar sein.

Zur Lösung dieser Aufgabe wird erfindungsgemäß vorgeschlagen, daß die Breite der Zungen des Zwischenstutzens vom Fuß der Zunge in Richtung auf das freie Ende hin abnimmt und daß einige der Zungen an ihrem freien Ende einen quer zu ihrer Längserstreckung verlaufenden Klemmbereich aufweisen, dessen Längenabmessungen die Breite der Zunge am freien Ende übersteigen. Durch die genannte Ausbildung der Zungen ergibt sich für die zwischen den Zungen liegenden Schlitze zwangsläufig eine solche Gestalt, daß sie keine parallel zueinander verlaufenden Flanken haben sondern in Draufsicht gesehen keilförmig gestaltet sind, wobei am freien Ende der benachbarten Zungen der vorhandene keilförmige Schlitz die größte Breite aufweist, während am Fuß der keilförmige Schlitz seine kleinste Breite besitzt. Die quer zu den Zungen verlaufenden Klemmbereiche wirken mit der Umfangsfläche des ringförmigen Dichtungskörpers zusammen und besorgen im Zusammenwirken mit Bereichen des Dichtungskörpers das Abdichten und die Zugentlastung des eingeführten Kabels od.dgl. Dadurch, daß - wie erwähnt - die Schlitze keilförmig gestaltet sind, haben die Zungen, vor allem in ihrem oberen Bereich, viel seitlichen Spielraum, so daß eine Anpassung an Kabel, Schläuche od.dgl. mit unterschiedlichen Durchmessern möglich ist. Im Gegensatz zu bekannten Ausführungsformen von Kabelverschraubungen legen sich somit die Seitenwände benachbarter Zungen nicht schon nach kurzem Weg aneinander und werden so an ihrer Weiterbewegung gehindert, wodurch sich eine nur ungenügende Abdichtung und Zugentlastung ergibt. Durch die verhältnismäßig großen Längenabmessungen des Klemmbereiches ergibt sich eine große Wirkfläche, was sich vorteilhaft für die Dichtungseigenschaften und für die Zugentlastung auswirkt.

Hinsichtlich der Anordnung und Ausbildung der quer zur Längserstreckung der Zungen verlaufenden Klemmbereiche ergeben sich mehrere Möglichkeiten. Bevorzugt wird jedoch eine Ausführungsform, bei der der Klemmbereich der Breite der Zunge nach beiden Seiten hin überragt. Dieses Überragen erfolgt zweckmäßig um den gleichen Betrag, so daß von den Seitenflächen der Zunge aus gesehen ein gleich weites Überstehen der Klemmbereiche vorhanden ist. Dabei ist ferner vorgesehen, die Klemmbereiche vor der eigentlichen inneren Fläche der Zungen liegen zu lassen, so daß die Querbewegung der Zungen beim Aufschrauben der Hutmutter nicht behindert wird.

Nach einem weiteren Vorschlag der Erfindung weist jede zweite Zunge einen solchen Klemmbereich auf.

Dabei ist vorgesehen, die einander zugekehrten Seitenflächen zweier benachbarter Klemmbereiche einen das maximale Maß des Verspannens bestimmenden gegenseitigen Abstand voneinander aufweisen zu lassen.

Wenn beispielsweise der Klemmring aus insgesamt acht Zungen besteht, dann wird bei der bevorzugten Ausführungsform jeder zweiten Zunge ein Klemmbereich zugeordnet, so daß jede zweite Zunge am vorderen freien Ende einen solchen Klemmbereich aufweist. Wenn diese Klemmbereiche aus ihrer Ruhelage, in welcher ihre benachbarten Seitenwände den weitesten Abstand voneinander haben, in die maximal mögliche andere Endlage überführt werden, dann bilden die Klemmbereiche einen geschlossenen Ring, weil sich dann ihre benachbarten Stirnflächen aneinander abstützen können. Ein solcher Ring hat einen Durchmesser, der denjenigen des zugehörigen Dichtungskörpers etwas unterschreitet.

Nach einem weiteren Vorschlag der Erfindung ist vorgesehen, einige andere der Zungen des Zwischenstutzens je einen sich quer zu ihrer Längserstreckung verlaufenden unteren Klemmbereich aufweisen zu lassen, dessen Oberkante unterhalb der Unterkante des Klemmbereiches der benachbarten Zungen liegt. Diese unteren Klemmbereiche sind somit in Richtung auf den Fuß der Zunge nach unten versetzt angeordnet.

Es ist vorgesehen, dem Zwischenstutzen eine gerade Anzahl von Zungen zuzuordnen, die abwechselnd einen unteren bzw. oberen Klemmbereich aufweisen, d.h. auf einen oberen Klemmbereich der einen Zunge folgt ein unterer Bereich der benachbarten Zunge. Auch diese unteren Klemmbereiche verlaufen quer zur Längserstreckung der Zungen und haben wiederum eine größere Breite als der benachbarte Bereich der Zunge. Sie stehen ebenfalls vorzugsweise zweckmäßig gleich weit ab, so daß eine symmetrische Anordnung der Klemmbereiche erreicht wird. Auf diese Weise werden große Teile der Umfangsfläche des Dichtungskörpers erfaßt und gegen den benachbarten Mantel des Kabels gedrückt.

In beiden Fällen ist vorgesehen, die Klemmbereiche in Draufsicht gesehen kreissegmentartig zu gestalten, derart, daß sie sich in der Verspannungsendlage zu einem Kreisring ergänzen, weil die benachbarten Stirnflächen der Klemmbereiche in dieser Lage aneinander liegen.

Bei der bevorzugten Ausführungsform der Erfindung ist vorgesehen, die Klemmbereiche den Zungen unmittelbar anzuformen. Bei einer solchen Ausbildung ist es möglich, den gesamten Zwischenstutzen der Kabelverschraubung einstückig aus einem Kunststoff zu fertigen. Da auch die Hutmutter und der Dichtungskörper einstückig gehalten sind, besteht die Kabelverschraubung nur aus drei Teilen.

Nach einem weiteren Vorschlag der Erfindung weisen die zwischen den mit Klemmbereichen versehenen Zungen liegenden restlichen Zungen einen nach innen gerichteten Vorsprung auf. Dieser ist zweckmäßig in Draufsicht gesehen dreieckförmig gestaltet, wobei die Spitze des Dreiecks nach innen gerichtet ist.

Dabei empfiehlt es sich, die Vorderkanten der Klemmbereiche und die Vorsprünge der Zungen auf einem Kreis liegen zu lassen. Diese Vorsprünge werden benutzt, um einen Ausgleich zu schaffen für die durch das Kippen der Zungen bedingte Winkelverzerrung der Klemmbereiche. Durch die Vorsprünge wird eine kreisringartige Anlage der Klemmbereiche auch bei kleinstem Klemmbereichdurchmesser erzielt.

Auf der Zeichnung ist die Erfindung in einem Ausführungsbeispiel dargestellt und zwar zeigen:

Fig. 1    in explosionsartiger Darstellung und in Seitenansicht die erfindungsgemäße Verschraubung (Kabelverschraubung),

Fig. 2    im Schnitt und im vergrößerten Maßstab den Oberteil des Zwischenstutzens der Kabelverschraubung nach der Fig. 1 der Zeichnung, teilweise weggebrochen, Schnittverlauf gemäß der Linie II - II der Fig. 3 und

Fig. 3    in nochmals vergrößertem Maßstab und schaubildlicher Darstellung den Zwischenstutzen der Kabelverschraubung nach der Fig. 1 der Zeichnung mit dem dazugehörigen Dichtungskörper in ihrer Lage vor dem Zusammensetzen, mit einer gegenüber Fig. 2 abgeänderten Ausführung des Aufnahmegewindes des Zwischenstutzens.

Es sei zunächst erwähnt, daß die Verschraubung aus Kunststoff - die sogenannte Kabelverschraubung - zur Ein- und Durchführung, ferner zur Abdichtung und Zugentlastung von Kabeln, Leitungen, Schläuchen od.dgl. Verwendung findet. Eine solche Kabelverschraubung besteht aus einem Zwischenstutzen mit den zugeordneten Dichtungskörpern und einer Hutmutter bzw. einer Druckschraube, wobei einmal Mittel vorhanden sind, um die Hutmutter unter Zwischenschaltung des Dichtungskörpers mit dem Zwischenstutzen lösbar zu verbinden. Darüber hinaus ist der Zwischenstutzen ebenfalls mit Verbindungsmitteln versehen, die sein Befestigen an irgendeinem Träger, wie einer Wand od.dgl. zulassen.

Im gewählten Ausführungsbeispiel besteht die Kabelverschraubung aus einem Zwischenstutzen 10, der einstückig aus einem Kunststoff hergestellt ist, einem Dichtungskörper 11, der aus einem elastisch nachgiebigen Werkstoff besteht und aus einer Überwurfmutter 12.

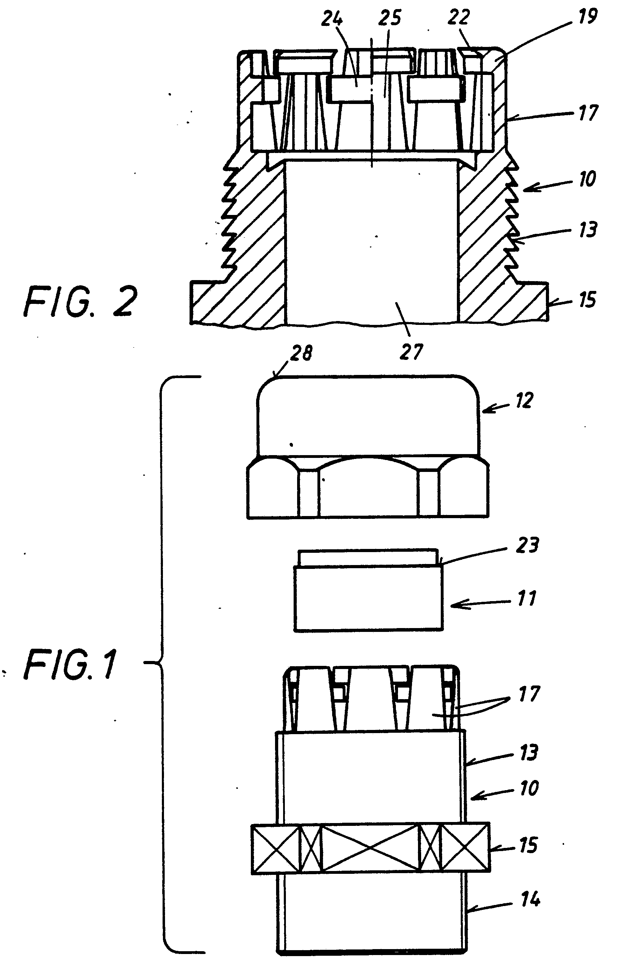

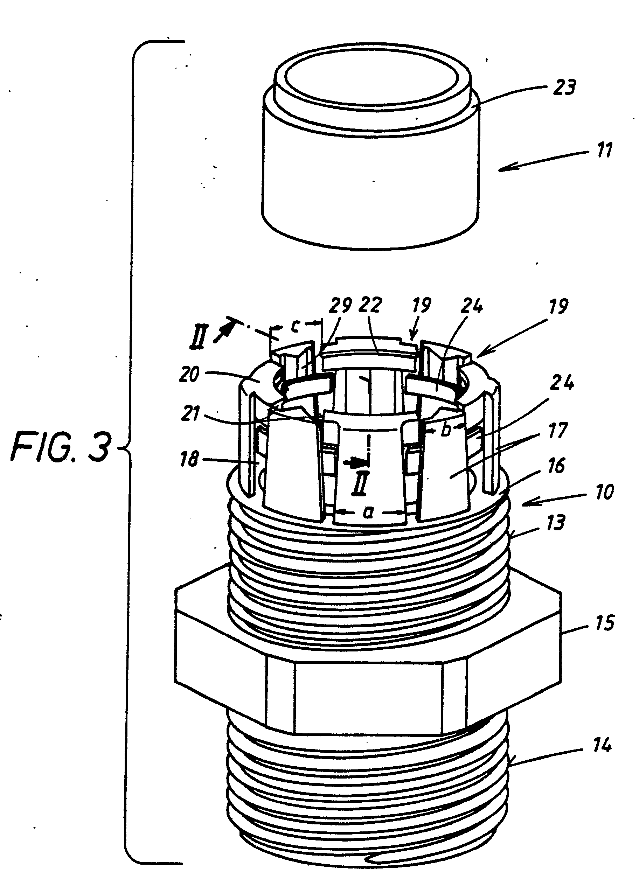

Der Zwischenstutzen 10, der von einer mittleren durchlaufenden Bohrung durchsetzt ist, hat ein Aufnahmegewinde 13 und ein Außengewinde 14, die durch einen Bund 15, beispielsweise durch einen Sechskant, voneinander getrennt sind. Das Außengewinde 14 dient dazu, im Zusammenwirken mit einem Gegengewinde den Zwischenstutzen 10 und damit die gesamte Kabelverschraubung an einem Träger, beispielsweise an einer Wand od.dgl. festzulegen. Das Aufnahmegewinde 13, welches oberhalb des Bundes 15 angeordnet ist, wirkt mit dem nicht sichtbaren Innengewinde der Überwurfmutter 12 zusammen. Diese hat im unteren Bereich ihrer äußeren Umfangsfläche eine unrunde, beispielsweise sechskantige Gestalt, wodurch der Angriff eines Werkzeuges erleichtert werden soll. In den Fig. 2 und 3 der Zeichnung sind unterschiedliche Ausführungsformen für das Aufnahmegewinde 13 wiedergegeben. In Fig. 3 ist das Aufnahmegewinde 13 als Pg-Gewinde ausgebildet, während in der Fig. 2 ein Sägegewinde dargestellt ist. Letzteres wird z. B. benutzt, wenn es um die Verbesserung der Aufnahme von Axialkräften geht.

Im gewählten Ausführungsbeispiel schließen sich an die Stirnfläche 16 des Aufnahmegewindes 13 des Zwischenstutzens 10 Zungen 17 an, die auf einem Kreis liegen, der konzentrisch zur Langsmittellinie des Zwischenstutzens angeordnet ist. Zwischen den Zungen 17 liegt jeweils ein Schlitz 18. Wie die Fig. 3 der Zeichnung am besten erkennen läßt, hat jede Zunge 17 im Bereich des Fußes, also in unmittelbarer Nähe der Stirnfläche 16 des Aufnahmegewindes 13 die größte Breite, die mit a bezeichnet ist. Zum freien Ende hin nimmt diese Breite der Zunge - im dargestellten Ausführungsbeispiel stetig - ab. Sie erreicht am freien Ende das kleinste mit b bezeichnete Maß. Bei dieser Gestaltung der Zunge 17 ergibt sich, daß der zwischen zwei Zungen liegende Schlitz 18 von der Stirnfläche 16 aus bzw. vom Fuß der Zunge aus gesehen sich nach oben hin verbreitert. Dies bedeutet, daß der Schlitz 18 jeweils in der Nähe der Stirnfläche 16 die kleinste Breite und am freien Ende der Zunge die größte Breite hat. Durch diese keilförmige Ausbildung steht im Bereich der vorderen freien Enden der Zungen 17 ein großer Ausweichraum zur Verfügung, der ausgenutzt wird, um beim Abdichten oder Zugentlasten von Kabeln kleineren Durchmessers optimale Verhältnisse im Bezug auf die Abdichtung und die Zugentlastung zu erreichen.

Wie aus der Fig. 3 der Zeichnung ferner erkennbar ist, haben einige der Zungen 17 an ihrem vorderen freien Ende einen quer zu ihrer Längserstreckung verlaufenden Klemmbereich 19. Die Oberfläche 20 jedes Klemmbereiches 19 ist dabei als Kreisringsegment ausgebildet, d.h. sämtliche - im dargestellten Ausführungsbeispiel vier - Klemmbereiche liegen auf einem Kreis, der wiederum konzentrisch zur Längsmittellinie des Zwischenstutzens 10 verläuft. In der Ruhelage ist jedoch zwischen den Stirnwänden zweier benachbarter Klemmbereiche 19 ein Abstand c vorhanden. Um diesen Betrag c ist ein maximales Zusammenpressen der Klemmbereiche 19 der Zungen 17 möglich. Nach Erreichen einer Bewegung der Klemmbereiche 19 um dieses Maß c beim bestimmungsgemäßen Gebrauch der Kabelverschraubung kommen nämlich die Seitenflächen 21 zweier benachbarter Klemmbereiche in Anlage.

Jeder Klemmbereich 19 hat noch eine in eine Spitze auslaufende Vorderkante 22, die mit einem Absatz 23 des Dichtungskörpers 11 zusammenwirkt. Hierdurch kann beispielsweise beim Transport oder bei der Lagerung der in dem Aufnahmeraum 25 eingelegte Dichtungskörper 11 gegen Herausfallen gesichert werden.

Im gewählten Ausführungsbeispiel ist jeder zweiten Zunge 17 des Zwischenstutzens 10 ein Klemmbereich 19 angeordnet. Dieser ist jeweils mit der Zunge 17 einstückig, also dieser angeformt. Die Breite des Klemmbereiches 19 ist dabei größer gehalten als das Maß b, so daß - wie die Fig. 3 gut erkennen läßt - in der Ruhestellung der obere Bereich der Schlitze 18 praktisch überdeckt wird. Jedoch liegen die überstehenden Teile des Klemmbereiches 19 nicht in der Schlitzebene sondern davor, sind also in Richtung auf den Aufnahmeraum 25 nach innen versetzt. Auf diese Weise wird die seitliche Bewegung der Zungen nicht behindert.

Da die zwischen den mit den Klemmbereichen 19 versehenen Zungen 17 liegenden restlichen Zungen 17 an sich mit ihrer Vorderfläche gegenüber den Vorderkanten der Klemmbereiche 19 etwas zurückliegen und da die einseitig festgelegten Zungen beim bestimmungsgemäßen Gebrauch umso mehr gekippt werden, je kleiner der Durchmesser des festzuhaltenden Leiters ist, sind Vorkehrungen getroffen, die auch bei kleinstem Leiterdurchmesser die Abdichtung und Zugentlastung gewährleisten. Zu diesem Zweck ist vorgeschlagen, die jeweils zwischen den mit Klemmbereichen 19 liegenden restlichen Zungen mit einem Vorsprung 29 zu versehen, vergl. dazu insbesondere die Fig. 3 der Zeichnung. Dieser Vorsprung ist im gewählten Ausführungsbeispiel in Draufsicht gesehen dreieckförmig gestaltet, wobei die Spitze des Dreiecks nach innen gerichtet ist. Dabei liegen die Vorderkanten 22 der Klemmbereiche 19 und die Vorsprünge 29 der Zungen 17 im gewählten Ausführungsbeispiel auf einem Kreis.

Auch die im Ausführungsbeispiel vorgesehenen vier weiteren Zungen 17 des Zwischenstutzens 10 haben einen Klemmbereich. Dieser ist jedoch als unterer Klemmbereich 24 bezeichnet und zwar deshalb, weil er vom freien Ende der Zunge 17 hin nach unten - also in Richtung auf den Fuß der Zunge 17 - verlagert ist, wie dies die Fig. 3 der Zeichnung gut erkennen läßt. Die unteren Klemmbereiche 24 stehen nach beiden Seiten hin über die seitlichen Begrenzungskanten der zugehörigen Zunge 17 vor. Auch hier liegen sie nicht in der Schlitzebene sondern sind wiederum in Richtung auf den Aufnahmeraum 25, also nach innen hin versetzt.

Im gewählten Ausführungsbeispiel sind somit jeder der vorhandenen acht Zungen Klemmbereiche zugeordnet, nur liegt die Hälfte der Klemmbereiche, nämlich die mit 19 bezeichneten, jeweils am oberen freien Ende der Zunge 17, während die unteren Klemmbereiche 24 tiefer, also in Richtung Zungenfuß angeordnet sind. Dabei ist eine solche Anordnung gewählt, daß abwechselnd den Zungen ein Klemmbereich 19 am freien Ende und der benachbarten Zunge ein unterer Klemmbereich 24 zugeordnet ist.

Bei der max. möglichen Grenzlage ergänzen sich die in Draufsicht gesehen kreisringsegmentförmigen Klemmbereiche - deren Oberfläche mit 20 bezeichnet ist - zu einem Vollkreis, nämlich dann, wenn die Stirnflächen 21 benachbarter Klemmbereiche 19 unter Überwindung des Abstandes c aneinanderstoßen.

Die Überwurfmutter 12, die einstückig aus einem Kunststoff gefertigt ist, hat einen an sich bekannten Aufbau. Es sei daher nur erwähnt, daß sie eine Stirnfläche 28 aufweist, in der ein in der Zeichnung nicht sichtbarer mittiger Durchbruch zum Ein- bzw. Durchführen eines Kabels, einer Leitung od.dgl. vorgesehen ist. Die Bohrung fluchtet mit der des hohlzylindrischen Dichtungskörpers 11 und auch mit der Durchgangsbohrung des Zwischenstutzens 10, so daß ein ungehindertes Ein- bzw. Durchführen des Kabels oder der Leitung möglich ist, ehe die Kabelverschraubung in ihre wirksame Lage überführt wird.

Beim Anbringen der Überwurfmutter 12, welches erfolgt, nachdem ein Kabel oder eine Leitung in die Kabelverschraubung eingeführt bzw. durchgeführt ist, werden die Zungen 17 nach innen in Richtung auf die Umfangsfläche des Dichtungskörpers und damit des Kabels gedrückt, wobei die oberen Klemmbereiche 19 der Zungen 17 und auch die unteren Klemmbereiche 24 derselben mit der Umfangsfläche des Dichtungskörpers 11 in Wirkverbindung treten, jedoch in unterschiedlichen Ebenen. In der Endlage - also nach dem Anziehen der Überwurfmutter 12 - ist nicht nur ein ordnungsgemäßes Abdichten des Kabels od.dgl. erreicht sondern auch die gewünschte Entlastung gegen Herausziehen (Zugentlastung). Dabei erfolgt ein automatisches Anpassen der Lage der Zungen 17 und deren Klemmbereiche 19 bzw. 24 an den Durchmesser des abzudichtenden bzw. festzuhaltenden Kabels. Dabei ist von besonderem Vorteil, daß eine verhältnismäßig große Klemmbereichsfläche vorhanden ist. Diese Klemmfläche ergibt sich aus der Summe der Einzelflächen der Klemmbereiche 19 bzw. 24 der Zungen 17. Die nach oben hin verbreiterten Schlitze 18 geben den Zungen 17 eine große seitliche Bewegungsmöglichkeit. Da die Klemmbereiche 19 bzw. 24 in Richtung auf das Innere den Zungen 17 vorgelagert sind, stören sie die Seitenbewegung der Zungen 17 nicht.

Wie bereits erwähnt, ist die dargestellte Ausführung nur eine beispielsweise Verwirklichung der Erfindung und diese nicht darauf beschränkt. Vielmehr sind noch mancherlei andere Ausführungen und Anwendungen möglich. Dies gilt insbesondere für die Ausbildung der Zungen 17 und der ihnen zugeordneten Klemmbereiche 19 bzw. 24. Diese Klemmbereiche 19 bzw. 24 können sowohl hinsichtlich ihrer Anzahl als auch hinsichtlich ihrer Gestalt und Anordnung variiert werden. Auch kann die Erfindung bei anderen an sich bekannten Kabelverschraubungen angewandt werden. Ferner ist es möglich, dem Vorsprung 29 eine andere als die in der Fig. 3 wiedergegebene Ausführung zu geben.

**Bezugszeichenliste:**

| | |
|---|---|
| 10 - | Zwischenstutzen |
| 11 - | Dichtungskörper |
| 12 - | Überwurfmutter |
| 13 - | Aufnahmegewinde (für 12) |
| 14 - | Außengewinde |
| 15 - | Bund |
| 16 - | Stirnfläche |
| 17 - | Zungen |
| 18 - | Schlitz |
| 19 - | Klemmbereich (von 17) |
| 20 - | Oberfläche (von 19) |
| 21 - | Seitenflächen (von 19) |
| 22 - | Vorderkante (von 17) |
| 23 - | Absatz (an 11) |
| 24 - | unterer Klemmbereich |
| 25 - | Aufnahme (für 11) |
| 26 - | Sechskant (an 12) |
| 27 - | Durchgang (für Kabel, Leitungen od.dgl.) |
| 28 - | Stirnfläche (von 12) |
| 29 - | Vorsprung |
| a | Breite der Zunge am Fuß |
| b - | Breite der Zunge am vorderen Ende |
| c - | Abstand zweier Seitenflächen 19 voneinander (im Ruhezustand) |

## Patentansprüche

1. Verschraubung aus Kunststoff zur Ein- und Durchführung, Abdichtung und Zugentlastung von Kabeln, Leitungen oder Schläuchen, bestehend aus einem hohlzylindrischen Zwischenstutzen mit zugeordnetem Dichtungskörper und einer Hutmutter bzw. Druckschraube, wobei am hohlzylindrischen Zwischenstutzen durch Schlitze voneinander getrennte Zungen koaxial angeordnet sind, welche beim Betätigen der Hutmutter den Dichtungskörper gegen die Umfangsfläche des eingeführten Kabels od.dgl. pressen, dadurch gekennzeichnet, daß die Breite der Zungen (17) des Zwischenstutzens (10) vom Fuß der Zunge (17) in Richtung auf das freie Ende hin abnimmt und daß einige der Zungen (17) an ihrem freien Ende einen quer zu ihrer Längserstreckung verlaufenden Klemmbereich (19) aufweisen, dessen Längenabmessungen die Breite der Zunge (17) am freien Ende übersteigen.

2. Verschraubung nach Anspruch 1, dadurch gekennzeichnet, daß der Klemmbereich (19) die Breite (b) der Zunge (17) nach beiden Seiten vorzugsweise um den gleichen Betrag überragt.

3. Verschraubung nach Anspruch 1, dadurch gekennzeichnet, daß jede zweite Zunge (18) einen Klemmbereich (19) aufweist.

4. Verschraubung nach Anspruch 1 und 3, dadurch gekennzeichnet, daß die einander zugekehrten Seitenflächen (21) zweier benachbarter Klemmbereiche (19) einen das maximale Maß des Verspannens bestimmenden gegenseitigen Abstand (c) voneinander aufweisen.

5. Verschraubung nach Anspruch 1, dadurch gekennzeichnet, daß einige der Zungen (17) des Zwischenstutzens (10) je einen sich quer zu ihrer Längserstreckung verlaufenden unteren Klemmbereich (24) aufweisen, dessen Oberkante unterhalb der Unterkante des Klemmbereiches (19) der benachbarten Zungen (17) liegt.

6. Verschraubung nach Anspruch 1 und 5, gekennzeichnet durch eine gerade Anzahl von Zungen (17) des Zwischenstutzens (10) die abwechselnd einen unteren bzw. oberen Klemmbereich (24 bzw. 19) aufweisen.

7. Verschraubung nach einem der vorangehenden Ansprüche, dadurch gekennzeichnet, daß die Klemmbereiche (19 bzw. 24), in Draufsicht gesehen, kreisringsegmentartig gestaltet sind und sich in der Verspannungsendlage zu einem Kreisring ergänzen.

8. Verschraubung nach Anspruch 1, dadurch gekennzeichnet, daß die zwischenden mit Klemmbereichen (19) versehenen Zungen (17) liegenden restlichen Zungen (17) einen nach innen gerichteten Vorsprung (29) aufweisen.

9. Verschraubung nach Anspruch 8, dadurch gekennzeichnet, daß der Vorsprung (29) in Draufsicht gesehen dreieckförmig gestaltet ist, wobei die Spitze des Dreiecks nach innen gerichtet ist.

10. Verschraubung nach Anspruch 8 und 9, dadurch gekennzeichnet, daß Vorderkanten (22) der Klemmbereiche (19) und die Vorsprünge (29) der Zungen (17) auf einem Kreis liegen.

11. Verschraubung nach Anspruch 1, dadurch gekennzeichnet, daß das mit der Überwurfmutter (12) zusammenwirkende Aufnahmegewinde (13) sägezahnartig ausgebildet ist.

## Claims

1. Screwed connection consisting of synthetic plastics material, for leading in and through and for sealing and relieving the pull on cables, conductors or hoses, consisting of a hollow-cylindrical intermediate connecting piece with an associated sealing member and a cap nut or clamping nut, there being on hollow-cylindrical cap nut coaxial tongues which are separated from one another by slits and which, when the cap nut is actuated, press the sealing member against the peripheral face of the inserted cable, or the like, characterised in that the width of the tongues (17) on the intermediate connecting piece (10) diminishes from the root of the tongue (17) in the direction of the free end, and in that some of the tongues (17) have at their free end, extending transversely to their longitudinal extension, a clamping zone (19), the length of which exceeds the width of the tongue (17) at the free end.

2. Screwed connection according to Claim 1, characterised in that the clamping zone (19) preferably extends by the same amount on both sides beyond the width (b) of the tongue (17).

3. Screwed connection according to Claim 1, characterised in that every second tongue (18) comprises a clamping zone (19).

4. Screwed connection according to Claim 1 and 3, characterised in that the mutually facing lateral surfaces (21) of two adjacent clamping zones (19) are spaced apart from each other by a distance (c) which determines the maximum extent of the clamping action.

5. Screwed connection according to Claim 1, characterised in that some of the tongues (17) on the intermediate connecting member (10) have extending transversely to their longitudinal direction, a lower clamping zone (24) the top edge of which is below the bottom edge of the clamping zone (19) of the adjacent tongues (17).

6. Screwed connection according to Claim 1 and 5, characterised by an even number of tongues (17) on the intermediate connecting member (10) which alternately have a lower and an upper clamping zone (24 or 19).

7. Screwed connection according to one of the preceding Claims, characterised in that, viewed in plan, the clamping zones (19 or 24) are shaped like segments of a circle and, when in the extreme position of clamping, supplement one another to form a circle.

8. Screwed connection according to Claim 1, characterised in that the remaining tongues (17) located between tongues (17) which are provided with clamping zones (19) have an inwardly directed projection (29).

9. Screwed connection according to Claim 8, characterised in that, viewed in plan, the projection (29) is of triangular form, the tip of the triangle being directed inwardly.

10. Screwed connection according to Claim 8 and 9, characterised in that the leading edges (22) of the clamping zones (19) and the projections (29) on the tongues (17) lie on a circle.

11. Screwed connection according to Claim 1, characterised in that the receiving screwthread (13) which co-operates with the cap nut (12) is of sawtoothed construction.


**Revendications**

1. Raccord fileté en matière plastique pour l'entrée et la traversée de paroi, l'étanchéité et la décharge de traction de câbles, conduits ou tuyaux souples, se composant d'une tubulure intermédiaire de forme cylindrique creuse associée à un corps d'étanchéité et à un écrou à chapeau ou une vis de pression, où il est prévu sur la tubulure intermédiaire cylindrique creuse des languettes disposées coaxialement, séparées les unes des autres par des fentes et qui, lors de l'actionnement de l'écrou à chapeau, appliquent le corps d'étanchéité contre la surface périphérique du câble introduit ou analogue, caractérisé en ce que la largeur des languettes (17) de la tubulure intermédiaire (10) diminue depuis la base de la languette (17), en direction de son extrémité libre, et en ce que certaines des languettes (17) comportent, à leur extrémité libre, une zone de blocage (19) orientée perpendiculairement à leur dimension longitudinale et dont les dimensions en longueur sont supérieures à la largeur de la languette (17) à l'extrémité libre.

2. Raccord fileté selon la revendication 1, caractérisé en ce que la zone de blocage (19) dépasse de la largeur (b) de la languette (17) des deux côtés, de préférence de la même valeur.

3. Raccord fileté selon la revendication 1, caractérisé en ce que chaque languette d'ordre pair (18) comporte une zone de blocage (19).

4. Raccord fileté selon une des revendications 1 et 3, caractérisé en ce que les surfaces latérales (21), dirigées l'une vers l'autre, de deux zones de blocage adjacentes (19), sont séparées l'une de l'autre d'une distance (c) déterminant le degré maximal de serrage.

5. Raccord fileté selon la revendication 1, caractérisé en ce que certaines des languettes (17) de la tubulure intermédiaire (10) comportent chacune une zone inférieure de blocage (24) orientée perpendiculairement à leur dimension longitudinale et dont le bord supérieur est situé en-dessous du bord inférieur de la zone de blocage (19) des languettes adjacentes (17).

6. Raccord fileté selon une des revendications 1 et 5, caractérisé par un nombre pair de languettes (17) de la tubulure intermédiaire (10), qui comportent alternativement une zone inférieure ou une zone supérieure de blocage (24 ou 19).

7. Raccord fileté selon une des revendications précédentes, caractérisé en ce que les zones de blocage (19 ou 24) ont, en vue en plan, une forme de segment d'anneau circulaire et se complètent, dans la position limite de serrage, pour former un anneau circulaire.

8. Raccord fileté selon la revendication 1, caractérisé en ce que les languettes restantes (17) qui sont situées entre les languettes (17) pourvues de zones de blocage (19) comportent une saillie (29) dirigée vers l'intérieur.

9. Raccord fileté selon la revendication 8, caractérisé en ce que la saillie (29) a, en vue en plan, une forme de triangle, le sommet de ce triangle étant dirigé vers l'intérieur.

10. Raccord fileté selon une des revendications 8 ou 9, caractérisé en ce que les bords avant (22) des zones de blocage (19) et les saillies (29) des languettes (17) sont situés sur un cercle.

11. Raccord fileté selon la revendication 1, caractérisé en ce que le filetage récepteur (13) coopérant avec l'écrou à chapeau (12) est profilé en forme de dents de scie.

FIG. 2

FIG. 1

FIG. 3